# EUROPEAN PATENT SPECIFICATION

(11) **EP 3 906 569 B1**
(45) Date of publication and mention of the grant of the patent: **31.07.2024**
(21) Application number: 19708802.4
(22) Date of filing: 26.02.2019
(51) Int. Cl.: H01F 7/06, H01F 7/16, H01F 7/02, H04R 9/06, B06B 1/04, G06F 3/01, H02K 33/18, H04R 7/04

(54) **DUAL DIRECTION MAGNET ACTUATOR**
IN ZWEI RICHTUNGEN WIRKENDES MAGNETISCHES STELLGLIED
ACTIONNEUR MAGNETIQUE A DOUBLE DIRECTION

(43) Date of publication of application: 10.11.2021
(73) Proprietor: Huawei Technologies Co., Ltd., Longgang District Shenzhen, Guangdong 518129 (CN)
(72) Inventor: KESKIOPAS, Petri, Shenzhen, Guangdong 518129 (CN); MÄKI, Jouni Tapio, Shenzhen, Guangdong 518129 (CN)
(74) Representative: Maiwald GmbH
(86) International application number: PCT/EP2019/054727
(87) International publication number: WO 2020/173551

(56) References cited:
- US-A1- 2011 018 364
- US-A1- 2017 318 392

## Description

### TECHNICAL FIELD

The disclosure relates to a magnet actuator comprising a first housing arrangement, a second housing arrangement, and a main magnet arranged therebetween.

### BACKGROUND

Electronic devices may be provided with magnet actuators in order to generate, e.g., sound waves for audio. Prior art magnet actuators comprise magnets which either attract or repulse each other. Initially, the magnets are arranged in force equilibrium, but in order to generate sound waves the attractive or repulsive force between the magnets is changed by means of an electric current passing through a coil located between the magnets, the current causing at least one of the magnets to move such that the distance between the magnets decreases or increases.

As disclosed in GB2532436, the magnets of the audio actuator may be interconnected by means of resilient support elements which counteract the attractive or repulsive force between the magnets such that the magnets and the resilient support element are in a force equilibrium state as long as no current is supplied. The different components of the audio magnet actuator of GB2532436 are integrated into the device structure and arranged between the main elements of the device.

The appearance of the assembled electronic device can be assessed only after the force equilibrium state has been reached, i.e. after the main elements of the device have been assembled. Any possible defects, caused by dimensional tolerance variations of each separate element in the structure, variations in force between the magnets, or variations in the force caused by the resilient support element, will be visible only after assembly, and will subsequently be time consuming and costly to repair.

Furthermore, the resonance frequency range of a magnet actuator is usually too limited to be able to produce audio as well as haptic feedback. Audio requires high resonance frequencies, such as 1000 Hz. Haptic feedback, on the other hand, requires resonance frequencies low enough for users to sense them efficiently with their fingers, such as 100-200 Hz. Hence, prior art requires a plurality of magnet actuators to cover a sufficiently broad resonance frequency range.

US 2017/318392 A1 and US 2011/018364 A1 disclose a magnet actuator comprising a housing, two magnets and one coil arranged within the housing.

### SUMMARY

It is an object to provide an improved magnet actuator. The foregoing and other objects are achieved by the features of the independent claim. Further implementation forms are apparent from the dependent claims, the description, and the figures.

According to a first aspect of the present invention, there is provided a magnet actuator comprising a first housing arrangement comprising a first housing, a first balancing magnet, and a first coil partially surrounding the first balancing magnet, a second housing arrangement comprising a second housing, a second balancing magnet, and a second coil partially surrounding the second balancing magnet, the first coil and the first balancing magnet being at least partially located within, and fixed to, the first housing, the second coil and the second balancing magnet being at least partially located within, and fixed to, the second housing,
a main magnet arranged between the first balancing magnet and the second balancing magnet, a first constant attractive force being generated between the first housing and the main magnet, the first balancing magnet and the main magnet being configured to generate a first constant repulsive force therebetween, counteracting the first constant attractive force, such that the first housing arrangement and the main magnet are maintained in a force equilibrium state, a second constant attractive force being generated between the second housing and the main magnet, the second balancing magnet and the main magnet being configured to generate a second constant repulsive force therebetween, counteracting the second constant attractive force, such that the second housing arrangement and the main magnet are maintained in a force equilibrium state, the first coil and the main magnet being configured to generate a first alternating magnetic force therebetween, the second coil and the main magnet being configured to generate a second alternating magnetic force therebetween, wherein manipulating electrical current in the first coil causes a change in the first alternating magnetic force thereby causing displacement of the first housing arrangement in relation to the main magnet, and/or wherein manipulating electrical current in the second coil causes a change in the second alternating magnetic force thereby causing displacement of the second housing arrangement in relation to the main magnet.

A magnet actuator such as this, wherein a magnet and a housing are in a force equilibrium state facilitates the manufacture of the electronic device in which the magnet actuator is placed. The attractive force caused by the magnet and the housing are balanced from the start, such that the other components of the electronic device remain unaffected by, e.g., variations in the force or dimensional variation of the different components of the magnet actuator. Furthermore, the solution facilitates a very compact magnet actuator which, by using one magnet to operate two moving magnets, can not only generate resonance frequencies within a broader range, but also generate resonance frequencies within two different ranges at the same time such as, e.g., audio and haptic feedback. Additionally, the reduced number of elements reduces the complexity of the magnet actuator making it cheaper to manufacture and repair, and leaving fewer dimensional tolerance variations to be considered.

In a possible implementation form of the first aspect, the first alternating magnetic force is an attractive force or a repulsive force, the first alternating magnetic force being changed and the first housing arrangement being displaced a first displacement distance in relation to the main magnet by manipulating the electrical current in the first coil, facilitating a magnet actuator which can generate vibrations within a specific frequency range and in one specific direction.

In a further possible implementation form of the first aspect, the second alternating magnetic force is an attractive force or a repulsive force, the second alternating magnetic force being changed and the second housing arrangement being displaced a second displacement distance in relation to the main magnet by manipulating the electrical current in the second coil, facilitating a magnet actuator which can generate vibrations within a specific frequency range and in a further specific direction.

In a further possible implementation form of the first aspect, the first alternating magnetic force and the second alternating magnetic force are both attractive forces or repulsive forces, facilitating a bidirectional yet spatially efficient magnet actuator.

In a further possible implementation form of the first aspect, the first alternating magnetic force or the second alternating magnetic force is generated and changed independently of the other of the first alternating magnetic force and the second alternating magnetic force, allowing vibrations to be produced in any one desired, or both, directions along the center axis of the magnet actuator.

In a further possible implementation form of the first aspect, the first alternating magnetic force and the second alternating magnetic force are generated and changed simultaneously such that the first housing arrangement and the second housing arrangement are both displaced at an identical resonance frequency, facilitating application of a first functionality by means of movement of the housings, such as generating vibrations within the higher resonance frequency interval, producing e.g. sound waves.

In a further possible implementation form of the first aspect, the first alternating magnetic force and the second alternating magnetic force are generated and changed simultaneously, by different magnitudes, such that the first housing arrangement and the second housing arrangement are displaced at different resonance frequencies, allowing a wider interval of resonance frequencies to be generated, such as both sound waves and vibrations for haptic feedback and reducing the space needed for components able generate sound waves and vibrations for haptic feedback.

In a further possible implementation form of the first aspect, displacement by the first displacement distance is executed at a first resonance frequency, displacement by the second displacement distance is executed at a second resonance frequency, the first resonance frequency being at least 3 times higher than the second resonance frequency, facilitating e.g. generation of sound waves and haptic feedback at the same time.

In a further possible implementation form of the first aspect, the magnet actuator further comprises a third housing at least partially enclosing the main magnet, providing secure means for arranging the main magnet in a stationary position as well as amplifying the forces of the magnet.

In a further possible implementation form of the first aspect, the main magnet is fixed to the third housing by means of mechanical locking elements or adhesive, allowing the dimensions of the main magnet to be chosen independently of the inner dimensions of the third housing.

In a further possible implementation form of the first aspect, the magnet actuator further comprises a first flexible printed circuit and a second flexible printed circuit, the first flexible printed circuit being connected to the first coil and arranged between the first coil and an inner surface of the first housing, and the second flexible printed circuit being connected to the second coil and arranged between the second coil and an inner surface of the second housing, facilitating secure and simple connections to a driving component such as a printed circuit board (PCB).

According to a second aspect of the present invention, there is provided an electronic device comprising a first movable surface, a second moveable surface, an internal component at least partially enclosed by the moveable surfaces, and a magnet actuator according to the above arranged between the first movable surface and the internal component and/or the second moveable surface, the magnet actuator being configured to displace the first movable surface or the second moveable surface in response to displacement of the first housing arrangement, and/or in response to displacement of the second housing arrangement, of the magnet actuator, the main magnet of the magnet actuator being fixedly attached to the internal component, either directly or indirectly by means of the third housing of the magnet actuator.

By providing an electronic device with a magnet actuator which is balanced from the start, the other components of the electronic device remain unaffected by, e.g., variations in force or dimensions within the magnet actuator. Such a solution reduces the number of defective electronic devices and hence manufacturing and repair costs. Furthermore, a very compact magnet actuator is achieved which, by using one magnet to operate two moving magnets, can not only generate resonance frequencies within a broader range, but also generate resonance frequencies within two different ranges at the same time such as, e.g., audio and haptic feedback.

In a possible implementation form of the second aspect, the first housing of the magnet actuator or the second housing of the magnet actuator is attached to the first movable surface, and the second housing of the magnet actuator or the first housing of the magnet actuator is attached to the second movable surface, and wherein displacement of the first movable surface generates vibrations having a first resonance frequency and/or displacement of the second movable surface generates vibrations having a second resonance frequency within the electronic device, providing support for the components of the magnet actuator as well as facilitating transmission of vibrations both within the higher resonance frequency range, such as audio, as well as the lower resonance frequency range, such as haptic feedback.

In a further possible implementation form of the second aspect, the first movable surface is a display and/or the second moveable surface is a device cover, facilitating production of vibrations without needing additional, separate components.

In a further possible implementation form of the second aspect, the internal component is one of a device chassis, a printed circuit board, and a device frame, facilitating production of vibrations without needing additional, separate components as well as a very stable magnet actuator which can withstand large external forces.

This and other aspects will be apparent from and the embodiments described below.

### BRIEF DESCRIPTION OF THE DRAWINGS

In the following detailed portion of the present disclosure, the aspects, embodiments and implementations will be explained in more detail with reference to the example embodiments shown in the drawings, in which:
Fig. 1a shows a perspective view of an electronic device in accordance with one embodiment of the present invention;
Fig. 1b shows a partial cross-section of the electronic device shown in Fig. 1a;
Fig. 2 shows an exploded view of a magnet actuator in accordance with one embodiment of the present invention;
Fig. 3a shows a perspective view of the magnet actuator shown in Fig. 2;
Fig. 3b shows a cross-section of the magnet actuator shown in Figs. 2 and 3a;
Figs. 4a and 4b show cross-sections of an electronic device in accordance with one embodiment of the present invention.

### DETAILED DESCRIPTION

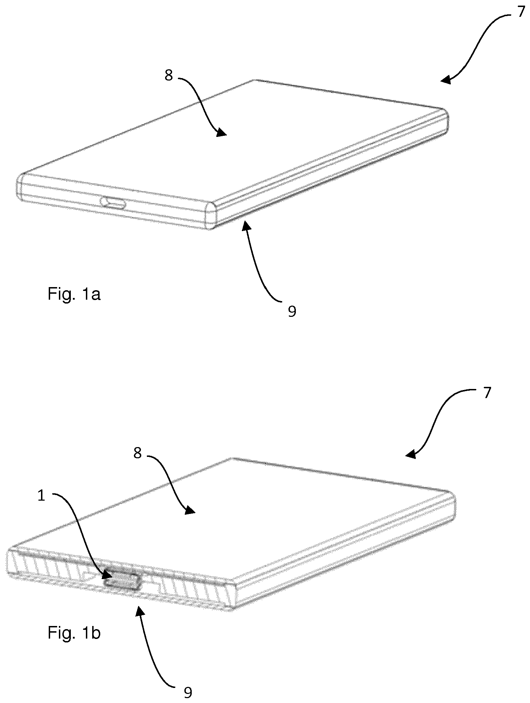

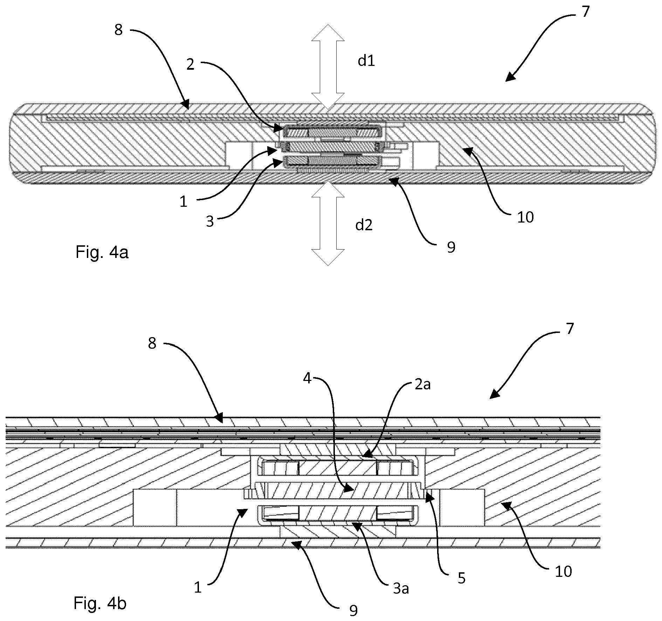

Figs. 1a-1b and 4a-4b show an electronic device 7 comprising a first movable surface 8, such as a display, a second moveable surface 9, such as a device cover, an internal component 10, such as a device chassis, a printed circuit board, and/or a device frame, and a magnet actuator 1. The magnet actuator 1 is arranged between the first movable surface 8 and the internal component 10 and/or the second moveable surface 9, and is configured to displace the first movable surface 8 and/or the second moveable surface 9 in response to displacement of a first housing arrangement 2 and/or a second housing arrangement 3 of the magnet actuator 1.

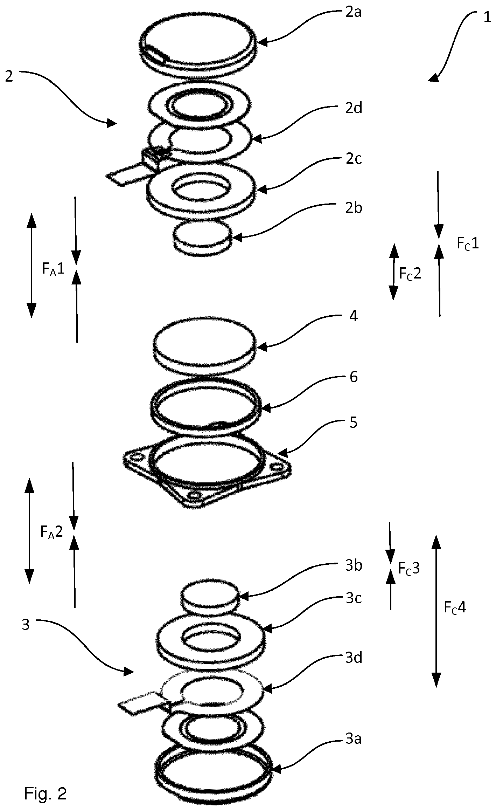

As shown in Fig. 2, the magnet actuator 1 comprises a first housing arrangement 2, a second housing arrangement 3, and a main magnet 4. The first housing arrangement 2 comprises a first housing 2a, a first balancing magnet 2b, and a first coil 2c partially surrounding the first balancing magnet 2b. The first coil 2c and the first balancing magnet 2b are at least partially located within, and fixed to, the first housing 2a. Correspondingly, the second housing arrangement 3 comprises a second housing 3a, a second balancing magnet 3b, and a second coil 3c partially surrounding the second balancing magnet 3b. The second coil 3c and the second balancing magnet 3b are at least partially located within, and fixed to, the second housing 3a. The first coil 2c and the second coil 3c may be planar voice coils, and connected to audio amplifiers.

The first housing 2a and the second housing 3a are made of magnetic material, such as iron. Furthermore, the housings 2a, 3a may both be shaped as a hollow cylinder having one closed end and one open end, i.e. the cross-section of each housing 2a, 3a, along its center axis, which corresponds to the center axis of the magnet actuator 1, is essentially U-shaped. The peripheral surface of each housing 2a, 3a could have circular or elliptical shape, or e.g. be a polygon.

The open end of the first housing 2a and the open end of the second housing 3a are arranged such that they face each other, allowing the magnet to be at least partially enclosed by the first housing 2a and the second housing 3a. This allows the first housing 2a and the second housing 3a to limit any magnetic forces generated by the magnet actuator 1 to an enclosed space within at least one of the first housing 2a and the second housing 3a.

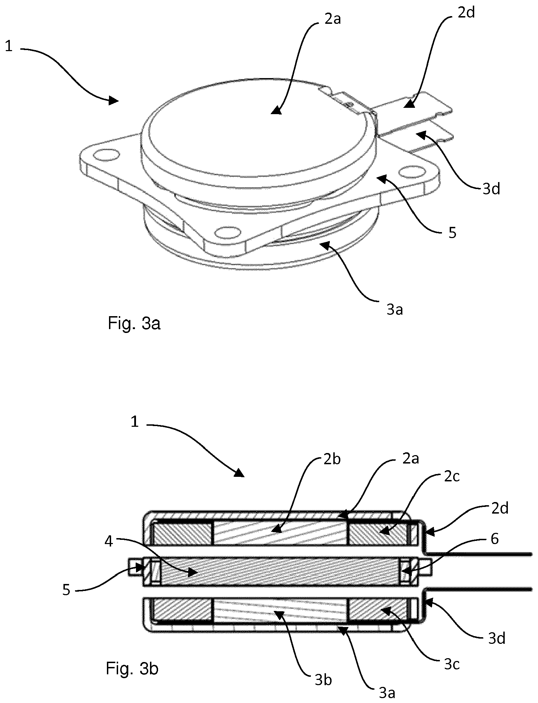

The main magnet 4 is arranged between the first balancing magnet 2b and the second balancing magnet 3b. In one embodiment, shown in Figs. 3a-3b the main magnet 4 is at least partially enclosed by a third housing 5, which third housing 5 is made of magnetic material, such as iron , and which may be shaped as a hollow cylinder having two opposite open ends. The third housing 5 is attached to the above-mentioned internal component 10 by means of the third housing 5 and, e.g., screws or adhesive. The main magnet 4 may be fixed to the third housing 5 directly, by adhesive or press-fit, or by means of mechanical locking elements 6. In a further embodiment, the main magnet is fixed directly to the internal component 10, e.g., by means of adhesive.

In one embodiment, the magnet actuator 1 comprises a first flexible printed circuit 2d and a second flexible printed circuit 3d, the circuits to be connected to drive means such as a printed circuit board (PCB). The first flexible printed circuit 2d is connected to the first coil 2c and arranged between the first coil 2c and an inner surface of the first housing 2a, and the second flexible printed circuit 3d is connected to the second coil 3c and arranged between the second coil 3c and an inner surface of the second housing 3a. The magnet actuator 1 may comprises wires instead of the first flexible printed circuit 2d and the second flexible printed circuit 3d.

A first constant attractive force Fc1 is generated between the first housing 2a and the main magnet 4. The first balancing magnet 2b and the main magnet 4 are configured to generate a first constant repulsive force Fc2 counteracting the first constant attractive force Fc1, such that the first housing arrangement 2 and the main magnet 4 are maintained in a force equilibrium state. Correspondingly, a second constant attractive force Fc3 is generated between the second housing 3a and the main magnet 4. The second balancing magnet 3b and the main magnet 4 are configured to generate a second constant repulsive force Fc4 counteracting the second constant attractive force Fc3, such that the second housing arrangement 3 and the main magnet 4 are maintained in a force equilibrium state.

Additionally, the first coil 2c and the main magnet 4 are configured to generate a first alternating magnetic force F_{A}1, and the second coil 3c and the main magnet 4 are configured to generate a second alternating magnetic force F_{A}2. By manipulating the electrical current in the first coil 2c a change in the first alternating magnetic force F_{A}1 is caused, which in turn causes displacement of the first housing arrangement 2 in relation to the main magnet 4. By manipulating the electrical current in the second coil 3c a change in the second alternating magnetic force F_{A}2 is caused, which in turn causes displacement of the second housing arrangement 3 in relation to the main magnet 4.

The first alternating magnetic force F_{A}1 is an attractive force or a repulsive force. The first alternating magnetic force F_{A}1 is changed and the first housing arrangement 2 is displaced a first displacement distance d1 in relation to the main magnet 4 by manipulating the electrical current in the first coil 2c. Correspondingly, the second alternating magnetic force F_{A}2 is an attractive force or a repulsive force. The second alternating magnetic force F_{A}2 is changed and the second housing arrangement 3 is displaced a second displacement distance d2 in relation to the main magnet 4 by manipulating the electrical current in the second coil 3c.

In one embodiment, only one of the first alternating magnetic force F_{A}1 and the second alternating magnetic force F_{A}2 is generated and/or changed. The first alternating magnetic force F_{A}1 or the second alternating magnetic force F_{A}2 is either an attractive force or a repulsive force. The first housing arrangement 2 may be displaced a first displacement distance d1 in relation to the main magnet 4 by manipulating the electrical current in the first coil 2c. Optionally, the second housing arrangement 3 is displaced a first displacement distance d1 in relation to the main magnet by manipulating the electrical current in the second coil 3c.

In one embodiment, the first alternating magnetic force F_{A}1 and the second alternating magnetic force F_{A}2 are both attractive forces or repulsive forces. The first alternating magnetic force F_{A}1 or the second alternating magnetic force F_{A}2 may be generated and changed independently of the other of the first alternating magnetic force F_{A}1 and the second alternating magnetic force F_{A}2.

In a further embodiment, the first alternating magnetic force F_{A}1 and the second alternating magnetic force F_{A}2 are generated and changed simultaneously such that the first housing arrangement 2 and the second housing arrangement 3 are both displaced at an identical resonance frequency. This allows the height of the magnet actuator 1 to vary in accordance with the drive signal, while the main magnet 4 is maintained in its stationary position between the first balancing magnet 2b and the second balancing magnet 3b.

In one embodiment, displacement by the first displacement distance d1 is executed at a first resonance frequency, within a first resonance frequency interval, while displacement by the second displacement distance d2 is executed at a second resonance frequency, within a second resonance frequency interval. The first resonance frequency is at least 3 times higher than the second resonance frequency, e.g. the first resonance frequency may be ca 1000 Hz while the second resonance frequency is ca 100 Hz. The first resonance frequency interval is generally suitable for producing vibrations in the form of sound waves, and the second resonance frequency interval is suitable for producing vibrations in the form of haptic feedback to the user. The second resonance frequency interval may also be suitable for use as a subwoofer, expanding the audio band to frequencies too low to be comprised within the first resonance frequency interval.

Displacement by the first displacement distance d1 at a first resonance frequency, and displacement by the second displacement distance d2 at a second resonance frequency may be executed simultaneously, i.e. sound waves and haptic feedback may be generated simultaneously or individually. In one embodiment, privacy leakage is minimized by allowing sound waves to be produced by means of vibrations at first resonance frequency, in one direction, while the vibration coupling in the opposite direction, e.g. to the back cover of an electronic device comprising the magnet actuator 1, is minimized by simultaneously allowing vibrations at second resonance frequency.

The present disclosure further relates to an electronic device, mentioned above. The electronic device 7 comprises a first movable surface 8, a second moveable surface 9, an internal component 10 at least partially enclosed by the moveable surfaces 8, 9, and a magnet actuator 1 arranged between the first movable surface 8 and the internal component 10 and/or the second moveable surface 9.

The magnet actuator 1 is configured to displace the first movable surface 8 and/or the second moveable surface 9 in response to displacement of the first housing arrangement 2, and/or in response to displacement of the second housing arrangement 3, of the magnet actuator 1. The main magnet 4 of the magnet actuator 1 is fixedly attached to the internal component 10, either directly or indirectly by means of the third housing 5 of the magnet actuator 1.

In one embodiment, the first housing 2a of the magnet actuator 1 or the second housing 3a of the magnet actuator 1 is attached to the first movable surface 8, and the second housing 3a of the magnet actuator 1 or the first housing 2a of the magnet actuator 1 is attached to the second movable surface 9, preferably by means of adhesive. Displacement of the first movable surface 8 generates vibrations having a first resonance frequency and/or displacement of the second movable surface 9 generates vibrations having a second resonance frequency within the electronic device 7. Due to the stiffness of the moveable surfaces 8, 9, the system comprising the moveable surfaces 8, 9, the internal component 10, and the magnet actuator 1 has high spring-mass resonance facilitating high resonance frequencies.

Displacement of the movable surfaces 8,9, by means of the magnet actuator 1, generates vibrations having a first and/or a second resonance frequency within the electronic device 5. The moveable surfaces 8,9 may be displaced such that they bend in a direction from or towards the internal component 10.

The various aspects and implementations have been described in conjunction with various embodiments herein. However, other variations to the disclosed embodiments can be understood and effected by those skilled in the art in practicing the claimed subject-matter, from a study of the drawings, the disclosure, and the appended claims. In the claims, the word "comprising" does not exclude other elements or steps, and the indefinite article "a" or "an" does not exclude a plurality. The mere fact that certain measures are recited in mutually different dependent claims does not indicate that a combination of these measured cannot be used to advantage.

The reference signs used in the claims shall not be construed as limiting the scope.

## Claims

1. A magnet actuator (1) comprising
- a first housing arrangement (2) comprising a first housing (2a), a first balancing magnet (2b), and a first coil (2c) partially surrounding said first balancing magnet (2b),
- a second housing arrangement (3) comprising a second housing (3a), a second balancing magnet (3b), and a second coil (3c) partially surrounding said second balancing magnet (3b),
said first coil (2c) and said first balancing magnet (2b) being at least partially located within, and fixed to, said first housing (2a),
said second coil (3c) and said second balancing magnet (3b) being at least partially located within, and fixed to, said second housing (3a),
- a main magnet (4) arranged between said first balancing magnet (2b) and said second balancing magnet (3b),
a first constant attractive force (F_{C}1) being generated between said first housing (2a) and said main magnet (4), said first balancing magnet (2b) and said main magnet (4) being configured to generate a first constant repulsive force (F_{C}2) therebetween, counteracting said first constant attractive force (F_{C}1), such that said first housing arrangement (2) and said main magnet (4) are maintained in a force equilibrium state,
a second constant attractive force (F_{C}3) being generated between said second housing (3a) and said main magnet (4), said second balancing magnet (3b) and said main magnet (4) being configured to generate a second constant repulsive force (F_{C}4) therebetween, counteracting said second constant attractive force (F_{C}3), such that said second housing arrangement (3) and said main magnet (4) are maintained in a force equilibrium state,
said first coil (2c) and said main magnet (4) being configured to generate a first alternating magnetic force (F_{A}1) therebetween, said second coil (3c) and said main magnet (4) being configured to generate a second alternating magnetic force (F_{A}2) therebetween,
wherein manipulating electrical current in said first coil (2c) causes a change in said first alternating magnetic force (F_{A}1) thereby causing displacement of said first housing arrangement (2) in relation to said main magnet (4), and/or
wherein manipulating electrical current in said second coil (3c) causes a change in said second alternating magnetic force (F_{A}2) thereby causing displacement of said second housing arrangement (3) in relation to said main magnet (4).

2. The magnet actuator (1) according to claim 1, wherein said first alternating magnetic force (F_{A}1) is an attractive force or a repulsive force,
said first alternating magnetic force (F_{A}1) being changed and said first housing arrangement (2) being displaced a first displacement distance (d1) in relation to said main magnet (4) by manipulating the electrical current in said first coil (2c).

3. The magnet actuator (1) according to claim 1 or 2, wherein said second alternating magnetic force (F_{A}2) is an attractive force or a repulsive force,
said second alternating magnetic force (F_{A}2) being changed and said second housing arrangement (3) being displaced a second displacement distance (d2) in relation to said main magnet (4) by manipulating the electrical current in said second coil (3c).

4. The magnet actuator (1) according to any one of the previous claims, wherein said first alternating magnetic force (F_{A}1) and said second alternating magnetic force (F_{A}2) are both attractive forces or repulsive forces.

5. The magnet actuator (1) according to claim 4, wherein said first alternating magnetic force (F_{A}1) or said second alternating magnetic force (F_{A}2) is generated and changed independently of the other of said first alternating magnetic force (F_{A}1) and said second alternating magnetic force (F_{A}2).

6. The magnet actuator (1) according to claim 4, wherein said first alternating magnetic force (F_{A}1) and said second alternating magnetic force (F_{A}2) are generated and changed simultaneously such that said first housing arrangement (2) and said second housing arrangement (3) are both displaced at an identical resonance frequency.

7. The magnet actuator (1) according to claim 4, wherein said first alternating magnetic force (F_{A}1) and said second alternating magnetic force (F_{A}2) are generated and changed simultaneously, by different magnitudes, such that said first housing arrangement (2) and said second housing arrangement (3) are displaced at different resonance frequencies.

8. The magnet actuator (1) according to claim 7, wherein displacement by said first displacement distance (d1) is executed at a first resonance frequency, displacement by said second displacement distance (d2) is executed at a second resonance frequency, said first resonance frequency being at least 3 times higher than said second resonance frequency.

9. The magnet actuator (1) according to any one of the previous claims, further comprising a third housing (5) at least partially enclosing said main magnet (4).

10. The magnet actuator (1) according to claim 9, wherein said main magnet (4) is fixed to said third housing (5) by means of mechanical locking elements (6) or adhesive.

11. The magnet actuator (1) according to any one of the previous claims, further comprising a first flexible printed circuit (2d) and a second flexible printed circuit (3d), said first flexible printed circuit (2d) being connected to said first coil (2c) and arranged between said first coil (2c) and an inner surface of said first housing (2a), and
said second flexible printed circuit (3d) being connected to said second coil (3c) and arranged between said second coil (3c) and an inner surface of said second housing (3a).

12. An electronic device (7) comprising a first movable surface (8), a second moveable surface (9), an internal component (10) at least partially enclosed by said moveable surfaces (8, 9), and a magnet actuator (1) according to claim 9 arranged between said first movable surface (8) and said internal component (10) and/or said second moveable surface (9),
said magnet actuator (1) being configured to displace said first movable surface (8) or said second moveable surface (9) in response to displacement of the first housing arrangement (2), and/or in response to displacement of the second housing arrangement (3), of said magnet actuator (1),
the main magnet (4) of said magnet actuator (1) being fixedly attached to said internal component (10), either (i) directly or (ii) indirectly by means of the third housing (5).

13. The electronic device (7) according to claim 12, wherein the first housing (2a) of said magnet actuator (1) or the second housing (3a) of said magnet actuator (1) is attached to said first movable surface (8), and the second housing (3a) of said magnet actuator (1) or the first housing (2a) of said magnet actuator (1) is attached to said second movable surface (9), and
wherein displacement of said first movable surface (8) generates vibrations having a first resonance frequency and/or displacement of said second movable surface (9) generates vibrations having a second resonance frequency within said electronic device (7).

14. The electronic device (7) according to claim 12 or 13, wherein said first movable surface (8) is a display and/or said second moveable surface (9) is a device cover.

15. The electronic device (7) according to any one of claims 12 to 14, wherein said internal component (10) is one of a device chassis, a printed circuit board, and a device frame.

## Patentansprüche

1. Magnetisches Stellglied (1), umfassend
- eine erste Gehäuseanordnung (2), umfassend ein erstes Gehäuse (2a), einen ersten Ausgleichsmagneten (2b) und eine erste Spule (2c), die den ersten Ausgleichsmagneten (2b) teilweise umgibt,
- eine zweite Gehäuseanordnung (3), umfassend ein zweites Gehäuse (3a), einen zweiten Ausgleichsmagneten (3b) und eine zweite Spule (3c), die den zweiten Ausgleichsmagneten (3b) teilweise umgibt,
wobei sich die erste Spule (2c) und der erste Ausgleichsmagnet (2b) zumindest teilweise innerhalb des ersten Gehäuses (2a) befinden und an diesem befestigt sind,
wobei sich die zweite Spule (3c) und der zweite Ausgleichsmagnet (3b) zumindest teilweise innerhalb des zweiten Gehäuses (3a) befinden und an diesem befestigt sind,
- einen Hauptmagneten (4), der zwischen dem ersten Ausgleichsmagneten (2b) und dem zweiten Ausgleichsmagneten (3b) angeordnet ist,
wobei eine erste konstante Anziehungskraft (F_{C}1) zwischen dem ersten Gehäuse (2a) und dem Hauptmagneten (4) erzeugt wird, wobei der erste Ausgleichsmagnet (2b) und der Hauptmagnet (4) dazu konfiguriert sind, eine erste konstante Abstoßungskraft (F_{C}2) dazwischen zu erzeugen, die der ersten konstanten Anziehungskraft (F_{C}1) derart entgegenwirkt, dass die erste Gehäuseanordnung (2) und der Hauptmagnet (4) in einem Kräftegleichgewichtszustand gehalten werden,
wobei eine zweite konstante Anziehungskraft (F_{C}3) zwischen dem zweiten Gehäuse (3a) und dem Hauptmagneten (4) erzeugt wird, wobei der zweite Ausgleichsmagnet (3b) und der Hauptmagnet (4) dazu konfiguriert sind, eine zweite konstante Abstoßungskraft (F_{C}4) dazwischen zu erzeugen, die der zweiten konstanten Anziehungskraft (F_{C}3) derart entgegenwirkt, dass die zweite Gehäuseanordnung (3) und der Hauptmagnet (4) in einem Kräftegleichgewichtszustand gehalten werden,
wobei die erste Spule (2c) und der Hauptmagnet (4) dazu konfiguriert sind, eine erste magnetische Wechselkraft (F_{A}1) dazwischen zu erzeugen,
wobei die zweite Spule (3c) und der Hauptmagnet (4) dazu konfiguriert sind, eine zweite magnetische Wechselkraft (F_{A}2) dazwischen zu erzeugen,
wobei ein Verstellen von elektrischem Strom in der ersten Spule (2c) eine Änderung der ersten magnetischen Wechselkraft (F_{A}1) verursacht, wodurch eine Verschiebung der ersten Gehäuseanordnung (2) in Bezug auf den Hauptmagneten (4) verursacht wird, und/oder
wobei ein Verstellen von elektrischem Strom in der zweiten Spule (3c) eine Änderung der zweiten magnetischen Wechselkraft (F_{A}2) verursacht, wodurch eine Verschiebung der zweiten Gehäuseanordnung (3) in Bezug auf den Hauptmagneten (4) verursacht wird.

2. Magnetisches Stellglied (1) nach Anspruch 1, wobei die erste magnetische Wechselkraft (F_{A}1) eine Anziehungskraft oder eine Abstoßungskraft ist,
wobei die erste magnetische Wechselkraft (F_{A}1) verändert wird und die erste Gehäuseanordnung (2) um eine erste Verschiebungsstrecke (d1) in Bezug auf den Hauptmagneten (4) verschoben wird, indem der elektrische Strom in der ersten Spule (2c) verstellt wird.

3. Magnetisches Stellglied (1) nach Anspruch 1 oder 2, wobei die zweite magnetische Wechselkraft (F_{A}2) eine Anziehungskraft oder eine Abstoßungskraft ist,
wobei die zweite magnetische Wechselkraft (F_{A}2) verändert wird und die zweite Gehäuseanordnung (3) um eine zweite Verschiebungsstrecke (d2) in Bezug auf den Hauptmagneten (4) verschoben wird, indem der elektrische Strom in der zweiten Spule (3c) verstellt wird.

4. Magnetisches Stellglied (1) nach einem der vorhergehenden Ansprüche, wobei die erste magnetische Wechselkraft (F_{A}1) und die zweite magnetische Wechselkraft (F_{A}2) beide Anziehungskräfte oder Abstoßungskräfte sind.

5. Magnetisches Stellglied (1) nach Anspruch 4, wobei die erste magnetische Wechselkraft (F_{A}1) oder die zweite magnetische Wechselkraft (F_{A}2) unabhängig von der anderen der ersten magnetischen Wechselkraft (F_{A}1) und der zweiten magnetischen Wechselkraft (F_{A}2) erzeugt und verändert wird.

6. Magnetisches Stellglied (1) nach Anspruch 4, wobei die erste magnetische Wechselkraft (F_{A}1) und die zweite magnetische Wechselkraft (F_{A}2) gleichzeitig derart erzeugt und verändert werden, dass die erste Gehäuseanordnung (2) und die zweite Gehäuseanordnung (3) beide mit einer identischen Resonanzfrequenz verschoben werden.

7. Magnetisches Stellglied (1) nach Anspruch 4, wobei die erste magnetische Wechselkraft (F_{A}1) und die zweite magnetische Wechselkraft (F_{A}2) gleichzeitig derart erzeugt und um unterschiedliche Größen verändert werden, dass die erste Gehäuseanordnung (2) und die zweite Gehäuseanordnung (3) mit unterschiedlichen Resonanzfrequenzen verschoben werden.

8. Magnetisches Stellglied (1) nach Anspruch 7, wobei die Verschiebung um die erste Verschiebungsstrecke (d1) bei einer ersten Resonanzfrequenz ausgeführt wird, die Verschiebung um die zweite Verschiebungsstrecke (d2) bei einer zweiten Resonanzfrequenz ausgeführt wird, wobei die erste Resonanzfrequenz mindestens 3-mal höher ist als die zweite Resonanzfrequenz.

9. Magnetisches Stellglied (1) nach einem der vorhergehenden Ansprüche, ferner umfassend ein drittes Gehäuse (5), das den Hauptmagneten (4) zumindest teilweise umschließt.

10. Magnetisches Stellglied (1) nach Anspruch 9, wobei der Hauptmagnet (4) durch mechanischer Verriegelungselemente (6) oder Klebstoff an dem dritten Gehäuse (5) befestigt ist.

11. Magnetisches Stellglied (1) nach einem der vorhergehenden Ansprüche, ferner umfassend eine erste flexible gedruckte Schaltung (2d) und eine zweite flexible gedruckte Schaltung (3d), wobei die erste flexible gedruckte Schaltung (2d) mit der ersten Spule (2c) verbunden ist und zwischen der ersten Spule (2c) und einer Innenfläche des ersten Gehäuses (2a) angeordnet ist, und
wobei die zweite flexible gedruckte Schaltung (3d) mit der zweiten Spule (3c) verbunden ist und zwischen der zweiten Spule (3c) und einer Innenfläche des zweiten Gehäuses (3a) angeordnet ist.

12. Elektronische Vorrichtung (7), umfassend eine erste bewegliche Fläche (8), eine zweite bewegliche Fläche (9), eine interne Komponente (10), die zumindest teilweise von den beweglichen Flächen (8, 9) umschlossen ist, und ein magnetisches Stellglied (1) nach Anspruch 9, das zwischen der ersten beweglichen Fläche (8) und der internen Komponente (10) und/oder der zweiten beweglichen Fläche (9) angeordnet ist, wobei das magnetische Stellglied (1) dazu konfiguriert ist, die erste bewegliche Fläche (8) oder die zweite bewegliche Fläche (9) als Reaktion auf eine Verschiebung der ersten Gehäuseanordnung (2) und/oder als Reaktion auf eine Verschiebung der zweiten Gehäuseanordnung (3) des magnetischen Stellglieds (1) zu verschieben,
wobei der Hauptmagnet (4) des magnetischen Stellglieds (1), entweder (i) direkt oder (ii) indirekt durch das dritte Gehäuse (5), fest an der internen Komponente (10) angebracht ist.

13. Elektronische Vorrichtung (7) nach Anspruch 12, wobei das erste Gehäuse (2a) des magnetischen Stellglieds (1) oder das zweite Gehäuse (3a) des magnetischen Stellglieds (1) an der ersten beweglichen Fläche (8) angebracht ist und das zweite Gehäuse (3a) des magnetischen Stellglieds (1) oder das erste Gehäuse (2a) des magnetischen Stellglieds (1) an der zweiten beweglichen Fläche (9) angebracht ist, und wobei eine Verschiebung der ersten beweglichen Fläche (8) Schwingungen erzeugt, die eine erste Resonanzfrequenz aufweisen, und/oder eine Verschiebung der zweiten beweglichen Fläche (9) Schwingungen erzeugt, die eine zweite Resonanzfrequenz innerhalb der elektronischen Vorrichtung (7) aufweisen.

14. Elektronische Vorrichtung (7) nach Anspruch 12 oder 13, wobei die erste bewegliche Fläche (8) ein Display ist und/oder die zweite bewegliche Fläche (9) eine Vorrichtungsabdeckung ist.

15. Elektronische Vorrichtung (7) nach einem der Ansprüche 12 bis 14, wobei die interne Komponente (10) eines von einem Vorrichtungsträger, einer Leiterplatte oder einem Vorrichtungsrahmen ist.

## Revendications

1. Actionneur magnétique (1) comprenant
- un premier agencement de boîtier (2) comprenant un premier boîtier (2a), un premier aimant d'équilibrage (2b) et une première bobine (2c) entourant partiellement ledit premier aimant d'équilibrage (2b),
- un second agencement de boîtier (3) comprenant un deuxième boîtier (3a), un second aimant d'équilibrage (3b) et une seconde bobine (3c) entourant partiellement ledit second aimant d'équilibrage (3b),
ladite première bobine (2c) et ledit premier aimant d'équilibrage (2b) étant au moins partiellement situés à l'intérieur dudit premier boîtier (2a) et fixés à celui-ci,
ladite seconde bobine (3c) et ledit second aimant d'équilibrage (3b) étant au moins partiellement situés à l'intérieur dudit deuxième boîtier (3a) et fixés à celui-ci,
- un aimant principal (4) agencé entre ledit premier aimant d'équilibrage (2b) et ledit second aimant d'équilibrage (3b),
une première force d'attraction constante (F_{C}1) étant générée entre ledit premier boîtier (2a) et ledit aimant principal (4), ledit premier aimant d'équilibrage (2b) et ledit aimant principal (4) étant configurés pour générer une première force répulsive constante (F_{C}2) entre eux, neutralisant ladite première force d'attraction constante (F_{C}1), de sorte que ledit premier agencement de boîtier (2) et ledit aimant principal (4) sont maintenus dans un état d'équilibre de force,
une seconde force d'attraction constante (F_{C}3) étant générée entre ledit deuxième boîtier (3a) et ledit aimant principal (4), ledit second aimant d'équilibrage (3b) et ledit aimant principal (4) étant configurés pour générer une seconde force répulsive constante (F_{C}4) entre eux, neutralisant ladite première force d'attraction constante (F_{C}3), de sorte que ledit second agencement de boîtier (3) et ledit aimant principal (4) sont maintenus dans un état d'équilibre de force,
ladite première bobine (2c) et ledit aimant principal (4) étant configurés pour générer une première force magnétique alternative (F_{A}1) entre eux,
ladite seconde bobine (3c) et ledit aimant principal (4) étant configurés pour générer une seconde force magnétique alternative (F_{A}2) entre eux,
dans lequel la manipulation du courant électrique dans ladite première bobine (2c) provoque une modification de ladite première force magnétique alternative (F_{A}1), provoquant ainsi un déplacement dudit premier agencement de boîtier (2) par rapport audit aimant principal (4), et/ou
dans lequel la manipulation du courant électrique dans ladite seconde bobine (3c) provoque une modification de ladite seconde force magnétique alternative (F_{A}2), provoquant ainsi un déplacement dudit second agencement de boîtier (3) par rapport audit aimant principal (4).

2. Actionneur magnétique (1) selon la revendication 1, dans lequel ladite première force magnétique alternative (F_{A}1) est une force attractive ou une force répulsive,
ladite première force magnétique alternative (F_{A}1) étant modifiée et ledit premier agencement de boîtier (2) étant déplacé d'une première distance de déplacement (d1) par rapport audit aimant principal (4) en manipulant le courant électrique dans ladite première bobine (2c).

3. Actionneur magnétique (1) selon la revendication 1 ou 2, dans lequel ladite seconde force magnétique alternative (F_{A}2) est une force attractive ou une force répulsive,
ladite seconde force magnétique alternative (F_{A}2) étant modifiée et ledit second agencement de boîtier (3) étant déplacé d'une seconde distance de déplacement (d2) par rapport audit aimant principal (4) en manipulant le courant électrique dans ladite seconde bobine (3c).

4. Actionneur magnétique (1) selon l'une quelconque des revendications précédentes, dans lequel ladite première force magnétique alternative (F_{A}1) et ladite seconde force magnétique alternative (F_{A}2) sont toutes deux des forces attractives ou des forces répulsives.

5. Actionneur magnétique (1) selon la revendication 4, dans lequel ladite première force magnétique alternative (F_{A}1) ou ladite seconde force magnétique alternative (F_{A}2) est générée et modifiée indépendamment de l'autre de ladite première force magnétique alternative (F_{A}1) et de ladite seconde force magnétique alternative (F_{A}2).

6. Actionneur magnétique (1) selon la revendication 4, dans lequel ladite première force magnétique alternative (F_{A}1) et ladite seconde force magnétique alternative (F_{A}2) sont générées et modifiées simultanément de sorte que ledit premier agencement de boîtier (2) et ledit second agencement de boîtier (3) sont tous deux déplacés à une fréquence de résonance identique.

7. Actionneur magnétique (1) selon la revendication 4, dans lequel ladite première force magnétique alternative (F_{A}1) et ladite seconde force magnétique alternative (F_{A}2) sont générées et modifiées simultanément, de différentes magnitudes, de sorte que ledit premier agencement de boîtier (2) et ledit second agencement de boîtier (3) sont tous deux déplacés à une fréquence de résonance identique.

8. Actionneur magnétique (1) selon la revendication 7, dans lequel le déplacement de ladite première distance de déplacement (d1) est exécuté à une première fréquence de résonance, le déplacement de ladite seconde distance de déplacement (d2) est exécuté à une seconde fréquence de résonance, ladite première la fréquence de résonance étant au moins 3 fois supérieure à ladite seconde fréquence de résonance.

9. Actionneur magnétique (1) selon l'une quelconque des revendications précédentes, comprenant également un troisième boîtier (5) renfermant au moins partiellement ledit aimant principal (4).

10. Actionneur magnétique (1) selon la revendication 9, dans lequel ledit aimant principal (4) est fixé audit troisième boîtier (5) au moyen d'éléments de verrouillage mécanique (6) ou d'un adhésif.

11. Actionneur magnétique (1) selon l'une quelconque des revendications précédentes, comprenant également un premier circuit imprimé flexible (2d) et un second circuit imprimé flexible (3d), ledit premier circuit imprimé flexible (2d) étant connecté à ladite première bobine (2c) et disposé entre ladite première bobine (2c) et une surface intérieure dudit premier boîtier (2a), et
ledit second circuit imprimé flexible (3d) étant connecté à ladite seconde bobine (3c) et agencé entre ladite seconde bobine (3c) et une surface intérieure dudit deuxième boîtier (3a).

12. Dispositif électronique (7) comprenant une première surface mobile (8), une seconde surface mobile (9), un composant interne (10) au moins partiellement entouré par lesdites surfaces mobiles (8, 9), et un actionneur magnétique (1) selon la revendication 9, agencé entre ladite première surface mobile (8) et ledit composant interne (10) et/ou ladite seconde surface mobile (9), ledit actionneur magnétique (1) étant configuré pour déplacer ladite première surface mobile (8) ou ladite seconde surface mobile (9) en réponse au déplacement du premier agencement de boîtier (2), et/ou en réponse au déplacement du second agencement de boîtier (3), dudit actionneur magnétique (1),
l'aimant principal (4) dudit actionneur magnétique (1) étant fixé de manière fixe audit composant interne (10), soit (i) directement, soit (ii) indirectement au moyen du troisième boîtier (5).

13. Dispositif électronique (7) selon la revendication 12, dans lequel le premier boîtier (2a) dudit actionneur magnétique (1) ou le deuxième boîtier (3a) dudit actionneur magnétique (1) est fixé à ladite première surface mobile (8), et le deuxième boîtier (3a) dudit actionneur magnétique (1) ou le premier boîtier (2a) dudit actionneur magnétique (1) est fixé à ladite seconde surface mobile (9), et dans lequel le déplacement de ladite première surface mobile (8) génère des vibrations ayant une première fréquence de résonance et/ou le déplacement de ladite seconde surface mobile (9) génère des vibrations ayant une seconde fréquence de résonance à l'intérieur dudit dispositif électronique (7).

14. Dispositif électronique (7) selon la revendication 12 ou 13, dans lequel ladite première surface mobile (8) est un affichage et/ou ladite seconde surface mobile (9) est un couvercle de dispositif.

15. Dispositif électronique (7) selon l'une quelconque des revendications 12 à 14, dans lequel ledit composant interne (10) est l'un parmi un châssis de dispositif, une carte de circuit imprimé et un cadre de dispositif.
